# EUROPÄISCHE PATENTSCHRIFT

(11) **EP 1 917 165 B1**
(45) Veröffentlichungstag und Bekanntmachung des Hinweises auf die Patenterteilung: **22.02.2012**
(21) Anmeldenummer: 06775871.4
(22) Anmeldetag: 15.08.2006
(51) Int. Cl.: B60R 21/233

(54) **FAHRER- ODER BEIFAHRERAIRBAGMODUL MIT EINEM GASSACK**
DRIVER ´S OR PASSENGER´ S AIRBAG MODULE WITH AN AIRBAG
MODULE SAC GONFLABLE DOTE D'UN SAC A GAZ DESTINE AU CONDUCTEUR OU AU PASSAGER

(30) Priorität: 25.08.2005 DE 202005013604 U; 08.03.2006 DE 102006011058
(43) Veröffentlichungstag der Anmeldung: 07.05.2008
(73) Patentinhaber: Takata-Petri AG, 63743 Aschaffenburg (DE)
(72) Erfinder: KALLISKE, Ingo, 14476 Potsdam (DE); OGAWA, Makoto, Ohmihachiman-shi Shiga 523-0031 (JP); KEUDEL, Frederike, 10439 Berlin (DE)
(74) Vertreter: Müller, Wolfram Hubertus
(86) Internationale Anmeldenummer: PCT/DE2006/001445
(87) Internationale Veröffentlichungsnummer: WO 2007/022758

(56) Entgegenhaltungen:
- EP-A- 1 452 403
- EP-A2- 1 364 838
- DE-U1- 20 102 115
- US-A1- 2004 155 440

## Beschreibung

Die Erfindung betrifft ein Fahrer- oder Beifahrerairbagmodul mit einem Gassack gemäß dem Oberbegriff des Patentanspruchs 1 und einen Fahrer- oder Beifahrerairbagmodul mit einem Gassack gemäß dem Oberbegriff des Patentanspruchs 10.

Es ist bekannt, dass die Entfaltung eines Gassacks eines Airbagmoduls unter bestimmten Umständen mit Risiken für den im Falle eines Aufpralls zu schützenden Fahrzeuginsassen verbunden sein kann. Gefahren bestehen insbesondere für Personen, die sich außerhalb ihrer normalen Sitzposition auf dem Fahrer- oder Beifahrersitz befinden (sogenannter "OoP-Fall"), für sehr kleine Personen, die auf dem Fahrersitz nahe am Lenkrad sitzen, und für Babys in rückwärts gerichteten Kindersitzen auf dem Beifahrersitz (sogenannter "RFIS-Fall"). Es bestehen verschiedene Strategien, um die Gefahr von Verletzungen solcher Personen bzw. von Personen in solchen Situationen zu minimieren. Eine Strategie besteht in einer sogenannten risikoarmen Entfaltung eines Gassacks (low risk deployment - LRP). Eine risikoarme Entfaltung sieht vor, dass durch Maßnahmen, die bereits bei der Entfaltung des Gassackes wirksam sind, die Gefahr von Verletzungen minimiert wird.

Aus der EP 1 364 840 A1 ist ein Airbagmodul mit einem Gassack bekannt, der zwei Gassackabschnitte aufweist. Dabei bildet der aufgeblasene Gassack an seiner einem zu schützenden Fahrzeuginsassen zugewandten Vorderseite einen zwischen den beiden Gassackabschnitten verlaufenden Spalt aus. Durch diesen Spalt sind die beiden Gassackabschnitte auf der Vorderseite des Gassackes vollständig voneinander getrennt. Auf der dem zu schützenden Fahrzeuginsassen abgewandten Rückseite des Gassackes sind die beiden Gassackabschnitte dagegen miteinander verbunden, wobei ein einziger Gasgenerator für das Aufblasen der beiden Gassackabschnitte im Auslösefall sorgt. Bei der EP 1 364 840 A1 ist des Weiteren ein flächiges Element vorgesehen, das die Vorderseite des Gassackes überbrückt und dazu dient, einen zu schützenden Fahrzeuginsassen bei einem Aufprall in Richtung auf die Vorderseite des Gassackes möglichst nicht durch die beiden Gassackabschnitte, sondern stattdessen durch das flächige Element aufzufangen. Es soll verhindert werden, dass ein Fahrzeuginsasse vollständig in den zwischen den beiden Gassackabschnitten gebildeten Spalt eindringt, da dies zu einer thermischen Belastung des zu schützenden Fahrzeuginsassen führen kann, insbesondere wenn dieser mit heißen Gewebeteilen des Gassackes in Kontakt tritt.

Aus der WO 02/02376 A1 ist ein Gassack für ein Fahrzeuginsassen-Rückhaltesystem bekannt, der ebenfalls aus zwei Gassackabschnitten besteht, zwischen denen im aufgeblasenen Zustand ein Spalt ausgebildet ist. Ein Insasse kann in einem OoP-Fall beim Aufblasen des Gassackes mit einem dem Gassack zugewandten Körperteil in den sich bildenden Spalt eindringen und diesen dabei aufspreizen. Hierdurch wird eine unmittelbare Kollision des Fahrzeuginsassen mit der ihm zugewandten Hüllenfläche des Gassackes verhindert.

Aus der US 2004/155440 A1 ist ein gattungsgemäßes Airbagmodul bekannt.

Es besteht ein Bedarf nach weiteren Systemen, die eine risikoarme Gassackentfaltung ermöglichen und hierdurch die Gefahren für OoP-Situationen und RFIS-Situationen minimieren. Insbesondere besteht ein Bedarf, bekannte Airbagmodule mit zwei Gassackabschnitten, die an ihrer dem Fahrzeuginsassen zugewandten Seite zwischen sich einen Spalt aufweisen, hinsichtlich der Schutzwirkung für einen Fahrzeuginsassen weiter zu optimieren.

Dementsprechend liegt der vorliegenden Erfindung die Aufgabe zugrunde, ein Fahrer- oder Beifahrerairbagmodul mit einem Gassack mit zwei zwischen sich einen Spalt ausbildenden Gassackabschnitten zur Verfügung zu stellen, der in effektiver Weise durch eine risikoarme Gassackentfaltung die Gefahr von Verletzungen von Personen in OoP- und RFIS-Situationen reduziert, wobei der maximale Abstand der an den Spalt angrenzenden Innenseiten der beiden Gassackabschnitte über mindestens ein Band gesteuert wird, das die beiden Gassackabschnitte miteinander verbindet.

Diese Aufgabe wird erfindungsgemäß durch ein Airbagmodul mit den Merkmalen des Anspruchs 1 und ein Airbagmodul mit den Merkmalen des Anspruchs 10 gelöst. Bevorzugte und vorteilhafte Ausgestaltungen der Erfindung sind in den Unteransprüchen angegeben.

Danach weist das erfindungsgemäße Airbagmodul Mittel auf, die bewirken, dass der maximale Abstand der an den Spalt zwischen den beiden Gassackabschnitten angrenzenden Innenseiten der beiden Gassackabschnitte von dem Befüllungsgrad des Gassacks abhängt, wobei mit zunehmendem Befüllungsgrad des Gassacks dieser Abstand abnimmt. Dies führt dazu, dass in einer initialen Befüllungsphase des Gassacks der maximale Abstand zwischen den Innenseiten der Gassackabschnitte groß ist, mit der Folge, dass eine Person in OoP-Situation in den zwischen den beiden Gassackabschnitten verlaufenden, in dieser initialen Phase breiten Spalt eindringen kann, so dass der unmittelbare Zusammenprall mit der sich entfaltenden Gassackhülle weitestgehend verhindert und die auf den Fahrzeuginsassen wirkende Kraft reduziert wird. Im Falle eines rückwärts gerichteten Kindersitzes, der auf dem Beifahrersitz angeordnet ist, können in der initialen Befüllungsphase die beiden Gassackabschnitte sich seitlich um den Kindersitz legen, wobei die Krafteinwirkung auf die in Fahrtrichtung gerichtete Rückenlehne des Kindersitzes reduziert wird.

Mit zunehmendem Befüllen des Gassacks nimmt der Abstand zwischen den beiden Gassackabschnitten bzw. deren einander gegenüberliegender Innenseiten dagegen ab, so dass ein zu schützender Fahrzeuginsasse, der mit dem weitgehend oder vollständig befüllten Gassack in Interaktion tritt, auf eine Vorderseite des Gassacks trifft, in der der Spalt zwischen den beiden Gassackabschnitten nur noch sehr klein oder fast verschwunden ist. Es tritt somit eine im Wesentlichen geschlossene Außenfläche des Gassacks in Interaktion mit dem Fahrzeuginsassen, so dass in gleicher Weise wie bei herkömmlichen, mit nur einer Kammer versehenen Gassäcken ein Schutz bereitgestellt wird.

Aus Sicht eines in Fahrtrichtung sehenden Fahrzeuginsassen ist der Abstand der Innenseiten der beiden Gassackabschnitte der quer zur Fahrtrichtung verlaufende Abstand zwischen der linken Innenseite eines rechts angeordneten Gassackabschnitts und der rechten Innenseite eines links angeordneten Gassacksabschnitts.

Als Spalt zwischen den beiden Gassackabschnitten wird der Raum verstanden, der sich zwischen den beiden einander zugewandten Gewebeabschnitten (den Innenseiten) der beiden Gassackabschnitte erstreckt. Insbesondere in der Anfangsphase des Befüllens des Gassacks kann dieser Spalt eine erhebliche Ausdehnung aufweisen. In der Terminologie der vorliegenden Anmeldung wird er jedoch auch in einem solchen frühen Zeitpunkt, wenn er eine relativ große Breite besitzt, als Spalt bezeichnet.

Gemäß einem ersten Erfindungsaspekt umfassen die Mittel ein zumindest teilweise an der Außenhaut des Gassacks befestigtes Band, das mindestens einen ersten und einen zweiten Abschnitt variabler Länge aufweist. Dabei nimmt die Länge des ersten Abschnitts in dem Maße zu- oder ab, in dem die Länge des zweiten Abschnitts ab- oder zunimmt, und legt die Länge des zweiten Abschnitts den maximalen Abstand der Innenseiten der Gassackabschnitte fest. Die Länge des ersten Abschnitts nimmt dabei mit zunehmendem Befüllen des Gassacks zu und die Länge des zweiten Abschnitts mit zunehmendem Befüllen des Gassacks ab.

Bevorzugt ist das Band an mindestens einem ersten Punkt mit dem einen Gassackabschnitt, an mindestens einem zweiten Punkt mit dem anderen Gassackabschnitt und an mindestens einem dritten Punkt mit dem Gassack oder einem anderen Element des Airbagmoduls verbunden.

Insbesondere ist bevorzugt vorgesehen, dass das Band an seinem einen Ende an einem ersten Befestigungspunkt des Gassacks oder eines anderen Elements des Airbagmoduls fixiert ist, das Band an seinem anderen Ende an einem zweiten Befestigungspunkt des einen Gassackabschnitts fixiert ist und das Band zwischen diesen Befestigungspunkten an einem am anderen Gassackabschnitt ausgebildeten Umlenkpunkt eine Umlenkung erfährt. Dabei ist der erste Abschnitt zwischen dem ersten Befestigungspunkt und dem Umlenkpunkt und der zweite Abschnitt zwischen dem Umlenkpunkt und dem zweiten Befestigungspunkt gebildet. Der Umlenkpunkt und der zweite Befestigungspunkt befinden sich auf unterschiedlichen Gassackabschnitten. Die Länge des Bandabschnitts zwischen diesen beiden Punkten legt den maximalen Abstand zwischen den Innenseiten der beiden Gassackabschnitte fest.

Der Umlenkpunkt ist beispielsweise durch eine Schlinge oder Öse am Gassack gebildet, durch die das Band hindurchgeführt ist. Das Band ist dabei gegenüber dem Umlenkpunkt verschiebbar.

Der erste Befestigungspunkt ist bevorzugt derart gewählt, dass seine Position nach dem Aufblasen des Gassacks im Wesentlichen unverändert bleibt. Alternativ ist der erste Befestigungspunkt derart gewählt, dass seine Position von einem Aufblasen des Gassacks nicht tangiert wird. In beiden Fällen wird erreicht, dass beim vollständig aufgeblasenen Gassack sich die Lage der beiden Gassackabschnitte zueinander nicht mehr verändert. Es ist beispielsweise der erste Befestigungspunkt am Modulgehäuse des Airbagmoduls ausgebildet. Ebenso kann der erste Befestigungspunkt jedoch auch am Gassack ausgebildet sein, insbesondere dem Teil des Gassacks, in dem die zwei Gassackkammern zusammenlaufen und der sich nahe dem Gasgenerator befindet.

In einer weiteren Ausgestaltung sind der Umlenkpunkt und der zweite Befestigungspunkt jeweils in einem dem zu schützenden Fahrzeuginsassen zugewandten vorderen Bereich der Gassackabschnitte ausgebildet. Dies weist den Vorteil auf, dass mit zunehmendem Aufblasen des Gassacks über das zwischen diesen Punkten verlaufende Band die dem Fahrzeuginsassen zugewandten Bereiche der Gassackabschnitte aneinandergeführt werden, so dass der Fahrzeuginsasse im Crashfall mit einer relativ homogenen Oberflache des Gassacks interagiert.

In einer alternativen Ausführungsform ist das Band geschlossen ausgebildet ist und entweder über zwei Umlenkpunkte und einen Befestigungspunkt oder über drei Umlenkpunkte mit dem Gassack oder anderen Elementen des Airbagmoduls verbunden. An den beiden Gassackabschnitten befindet sich dabei jeweils ein Umlenkpunkt.

Gemäß einem zweiten Erfindungsaspekt umfassen die Mittel mindestens ein Band, das die beiden Gassackabschnitte miteinander verbindet. Insbesondere ist vorteilhafterweise vorgesehen, dass das mindestens eine Band den maximalen Abstand zwischen der dem Spalt abgewandten Außenseite des einen Gassackabschnitts und der dem Spalt abgewandten Außenseite des anderen Gassackabschnitts festlegt, wobei die an den Spalt angrenzenden Innenseiten der Gassackabschnitte mit zunehmenden Befüllungsgrad des Gassackes sich aufeinander zubewegen.

Die Erfindung sieht hierzu vor, dass jeder Gassackabschnitt ein inneres Band aufweist, das mit einem die beiden Gassackabschnitte verbindenden äußeren Band zusammenwirkt. Das innere Band wird jeweils im Gassackinneren von einem Befestigungspunkt an einer dem Spalt zugewandten Innenseite zu einer dem Spalt abgewandten Außenseite des Gassackabschnittes geführt, dort an einer innenseitigen Umlenkvorrichtung umgelenkt und ist dann mit einem Ende des äußeren Bandes verbunden.

Das äußere Band ist bevorzugt innerhalb der Gassackkammern jeweils in einem Gewebeschlauch geführt, der nicht in Verbindung mit dem Inneren der Gassackkammern steht, so dass über den Gewebeschlauch kein Gas entweichen kann. Bevorzugt sind bei jeder Gassackkammer das eine Ende des inneren Bandes, das eine Ende des Gewebeschlauches und ein Ende des äußeren Bandes in einem vernähten Verbindungsbereich miteinander verbunden.

In einer Abwandlung kann vorgesehen sein, dass die beiden inneren Bänder und das äußere Band einteilig als ein Band ausgebildet sind. Der Gewebeschlauch jeder Gassackkammer ist dann bevorzugt an seinem im Inneren der Gassackkammer liegenden Ende gasdicht mit dem Band verbunden.

Die beiden Gassackabschnitte sind bevorzugt durch zwei Gassackkammern gebildet, die bevorzugt an ihrer einem zu schützenden Fahrzeuginsassen abgewandten Rückseite zusammenlaufen.

Die Erfindung wird nachfolgend unter Bezugnahme auf die Figuren der Zeichnung anhand mehrerer Ausführungsbeispiele näher erläutert. Es zeigen:
- Figur 1: in perspektivischer, teilweise geschnittener Ansicht ein erstes Ausführungsbeispiel eines Gassacks mit zwei Gassackabschnitten, die über ein an drei Punkten mit der Gassackoberfläche verbundenes Band miteinander verbunden sind;
- Figur 2: in perspektivischer Ansicht einen Gassack mit zwei Gassackabschnitten gemäß dem Stand der Technik;
- Figur 3: einen Gassack entsprechend der Ausgestaltung der Figur 1 in einer initialen Entfaltungsphase;
- Figur 4: den Gassack der Figur 3 nach vollständigem Befüllen des Gassacks;
- Figur 5: einen Gassack in einer initialen Befüllungsphase entsprechend der Figur 3, wobei ein den seitlichen Abstand der beiden Gassackabschnitte steuerndes Band als geschlossenes Band ausgeführt ist, das an drei Positionen mit dem Gassack verbunden ist;
- Figur 6: ein nicht die Erfindung betreffendes Beispiel eines Gassacks mit zwei Gassackabschnitten, bei dem die einander abgewandten Außenflächen der beiden Gassackabschnitte über ein durch die Gassackabschnitte verlaufendes Band fester Länge miteinander verbunden sind;
- Figur 7: ein nicht die Erfindung betreffendes Beispiel eines Gassacks, bei dem zwei Bänder vorgesehen sind, von denen jedes zum einen mit der Außenseite eines der beiden Gassackabschnitte und zum anderen mit der Innenseite des anderen der beiden Gassackabschnitte verbunden ist;
- Figur 8: ein nicht die Erfindung betreffendes Beispiel eines Gassacks, bei dem die beiden einander zugewandten Innenseiten der beiden Gassackabschnitte nach Art eines Reißverschlusses miteinander verbindbar sind;
- Figur 9: ein weiteres alternatives Ausführungsbeispiel eines Gassacks mit zwei Gassackabschnitten, wobei die beiden Gassackabschnitte durch in den Gassackabschnitten verlaufende innere Bänder in Kombination mit einem äußeren Band miteinander verbunden sind; und
- Figur 10: eine vergrößerte Darstellung des einen Gassackabschnittes der Figur 9.

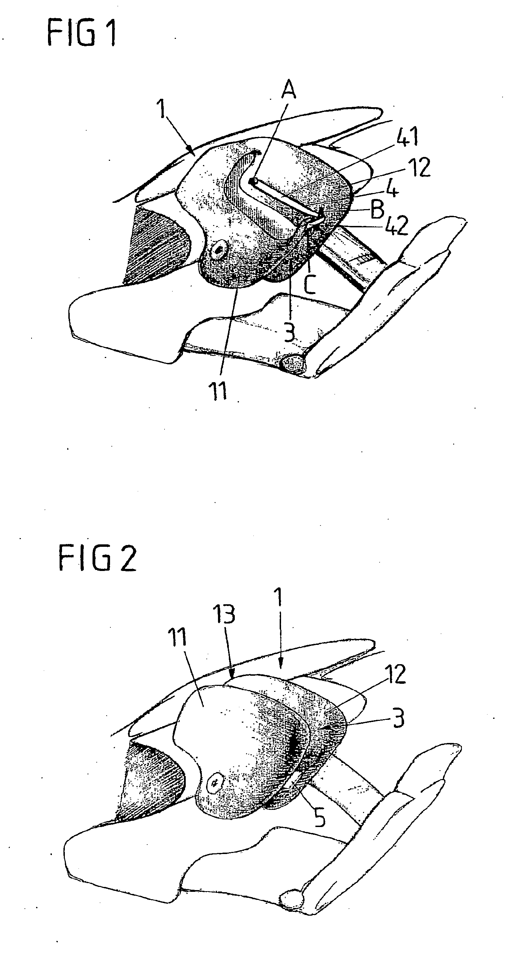

Die Figur 2 zeigt einen im Stand der Technik bekannten Gassack eines Beifahrer-Airbags, wie er im Wesentlichen aus der EP 1 364 840 A1 bekannt ist. Der Gassack 1 weist zwei Gassackabschnitte 11, 12 auf, die im Folgenden auch als Gassackkammern bezeichnet werden. Die beiden Gassackkammern 11, 12 sind auf ihrer dem zu schützenden Fahrzeuginsassen abgewandten, also der Windschutzscheibe zugewandten Seite miteinander verbunden und bilden dort einen zentralen Bereich 13, in den im Auslösefall das Gas eines nicht dargestellten Gasgenerators einströmt. Ausgehend von dem zentralen, gemeinsamen Bereich 13 bildet der Gassack 1, wenn man seiner äußeren Hülle in Richtung des Fahrzeuginsassen folgt, die beiden
Gassackkammern 11, 12 aus, die auf der dem Fahrzeuginsassen zugewandten Vorderseite des Gassacks 1 vollständig voneinander getrennt sind und zwischen sich einen Spalt 3 ausbilden. Die beiden Gassackkammern 11, 12 sind über ein flächiges Element 5 definierter Länge miteinander verbunden, um die beiden Gassackkammern 11, 12 im aufgeblasenen Zustand zusammenzuhalten, so dass eine Aufprallfläche für einen zu schützenden Fahrzeuginsassen vorliegt.

Ein entsprechend geformter Gassack kann in entsprechender Weise auf der Fahrerseite angeordnet und ausgebildet sein.

Die Figur 1 zeigt einen Gassack mit zwei Gassackkammern 11, 12, bei dem die beiden Kammern 11, 12 über ein Band 4 miteinander verbunden sind. Das Band 4 weist zwei Befestigungspunkte A, C und einen Umlenkpunkt B mit dem Gassack 1 bzw. den Gassackkammern 11, 12 auf. Der erste Befestigungspunkt A befindet sich an dem dem Fahrzeugsinsassen abgewandten Ende des Spaltes 3. Dieser Befestigungspunkt A wird bei einer Airbagentfaltung nicht oder nur in geringfügigem Maße bewegt und ist nach abgeschlossener Entfaltung ortsstabil. Er befindet sich beispielsweise nahe des oder am erwähnten zentralen Bereich 13. Auch ist denkbar, dass dieser Befestigungspunkt A von der Airbagentfaltung vollständig entkoppelt ist und beispielsweise an dem Gehäuse (nicht dargestellt) des Airbagmoduls befestigt ist.

Der Umlenkpunkt B befindet sich an der einen Gassackkammer 12, und zwar nahe der dem Fahrzeuginsassen zugewandten Vorderseite. Der Umlenkpunkt B ist dabei an der Innenseite der Gassackkammer 12 ausgebildet. Der zweite Befestigungspunkt C befindet sich an der anderen Gassackkammer 11 in einer der Position des Umlenkpunktes B entsprechenden Position.

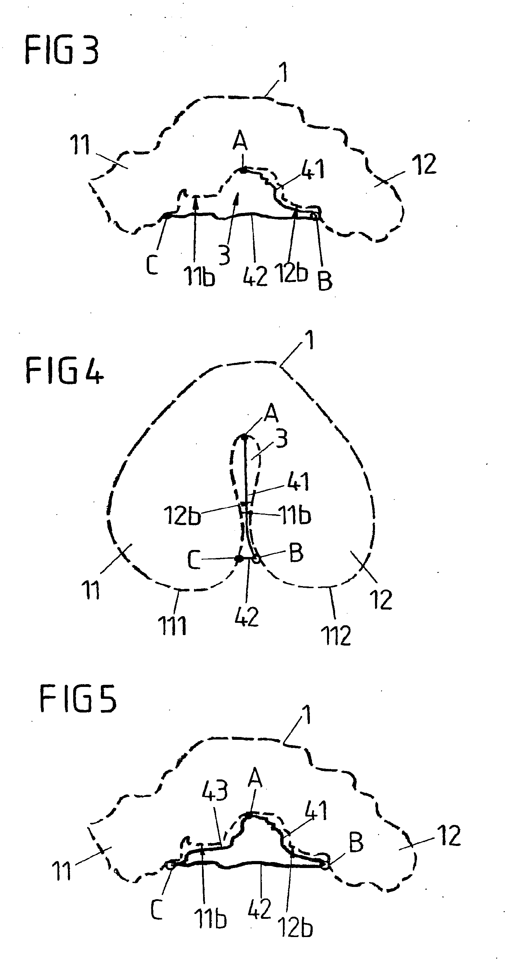

Daraus ergibt sich, dass das Band 4 zwei Abschnitte 41, 42 ausbildet, einen Abschnitt, der sich zwischen dem Befestigungspunkten A und dem Umlenkpunkt B erstreckt, und einen Abschnitt, der sich zwischen dem Umlenkpunkt B und dem Befestigungspunkt C erstreckt. Diese Situation ist schematisch auch in der Figur 3 für den Fall einer anfänglichen Befüllung des Gassacks dargestellt.

Es verhält sich so, dass der maximale Abstand zwischen den Gassackkammern 11, 12 bzw. deren Innenseiten 11b, 12b durch die Länge des Bandabschnitts 42 zwischen dem Umlenkpunkt B und dem zweiten Befestigungspunkt C festgelegt wird. Die gesamte Länge des Bandes 4 ist offensichtlich konstant. Die Länge der beiden Abschnitte 41, 42 ändert sich jedoch im Laufe der Entfaltung. Dies ist in den Figuren 3 und 4 dargestellt.

Die Figur 3 zeigt den Gassack 1 in einer initialen Phase der Entfaltung. Da die beiden Gassackkammern 11, 12 noch nicht vollständig mit Gas gefüllt sind, ist ihre Erstreckung in Richtung des zu schützenden Fahrzeuginsassen gering. Dementsprechend ist der Spalt 3 zwischen den beiden Gassackkammern 11, 12 von geringer Tiefe und die Länge des Bandabschnittes 41 zwischen den Punkten A, B relativ klein. Dementsprechend ist des weiteren die Länge des Bandabschnitts 42 zwischen den Punkten B, C relativ groß. Dies erlaubt es, die beiden Gassackkammern 11, 12 radial weit auseinander zu drücken bzw. aufzuspreizen. Wenn während dieses Entfaltungszustandes ein Körperteil eines Fahrzeuginsassen in OoP-Situation in Kontakt mit dem Gassack 1 tritt, kann es in den sich bildenden Spalt 3 eindringen. Die Kraft, die der sich entfaltende Gassack 1 auf den Fahrzeuginsassen ausübt, ist stark reduziert. Im Falle eines rückwärts gerichtet angeordneten Kindersitzes können sich die beiden Gassackkammern 11, 12 seitlich des Kindersitzes entfalten, ohne eine zu starke Kraft auf die Sitzschale des Kindersitzes auszuüben.

Im weiteren Verlauf der Befüllung des Gassackes 1 füllen sich die Gassackkammern 11, 12 zunehmend mit Gas. Dies führt dazu, dass die Länge des Bandabschnitts 41 zwischen den Punkten A, B zunimmt und damit die Länge des Bandabschnitts 42 zwischen den Punkten B, C abnimmt. Hierdurch wird der seitliche Abstand zwischen den Innenseiten 11 b, 12b der beiden Gassackkammern 11, 12 verringert. Diese Situation zeigt die Figur 4. Wenn in diesem Zustand des Gassackes ein Fahrzeuginsasse mit dem Gassack interagiert, so wird ihm durch die ihm zugewandten beiden Endbereiche 111, 112 der beiden Gassackabschnitte 11, 12 eine im Wesentliche ebene Aufprallfläche bereitgestellt, wobei zwischen den beiden Gassackkammern 11, 12 ein nur noch schmaler Spalt 3 ausgebildet ist.

Der Bandabschnitt 42, der den Abstand der beiden Gassackkammern 11, 12 steuert, ist somit in einem ersten Entfaltungsabschnitt des Gassackes 1 relativ lang, so dass die Innenseiten 11b, 12b der beiden Gassackkammern 11, 12 (und damit auch die Gassackkammern selbst) einen großen Abstand zueinander aufweisen und im Falle der Interaktion mit einem Fahrzeuginsassen radial nach außen gedrückt und gespreizt werden können, wobei sich der maximale Abstand zwischen den Innenseiten 11b, 12b einstellt. Mit zunehmender Befüllung des Gassackes 1 und der beiden Gassackkammern 11, 12 nimmt die Länge des Bandabschnitts 42 zwischen den Punkten B, C automatisch ab, wobei die beiden Gassackkammern 11, 12 ihren Abstand verringern und im Wesentlichen aneinander anliegen. Nach vollständigem Befüllen der beiden Gassackkammern 11, 12 weisen diese eine Position zueinander auf, wie sie sich auch bei der Verwendung eines flächigen Elementes 5 entsprechend dem Stand der Technik der Figur 2 ergibt.

Das Band 4 kann beispielsweise ein Gewebestreifen aus einem wenig elastischen Material sein. Es kann flächig oder alternativ als Seil ausgebildet sein, wobei die flächige Ausgestaltung bevorzugt ist.

Die Figuren 5 bis 8 zeigen weitere Ausgestaltungen eines Gassacks 1 mit zwei Gassackkammern 11, 12, bei denen der maximale Abstand der Innenseiten in Abhängigkeit von dem Entfaltungszustand über mindestens ein Band gesteuert wird.

Die Ausgestaltung der Figur 5 unterscheidet sich dabei nur geringfügig von der Ausgestaltung der Figuren 1, 3 und 4. Es ist vorgesehen, dass das Band 4 als geschlossenes Band ausgebildet ist, so dass zusätzlich ein Bandabschnitt 43 zwischen den Punkten C und A verläuft. Die Punkte B und C sind hier als Umlenkpunkte ausgebildet. Der Punkt A ist ein Befestigungspunkt. Alternativ können auch alle drei Punkte A, B, C als Umlenkpunkte ausgebildet sein.

Es gilt, dass die Summe der Längen der Bandabschnitte konstant ist. Mit zunehmendem Befüllen der beiden Gassackkammern 11, 12 erhöht sich die Länge der Bandabschnitte 41, 43 und reduziert sich die Länge des Bandabschnitts 42, so dass wiederum der maximale Abstand der Innenseiten 11 b, 12b der beiden Gassackkammern 11, 12 mit zunehmender Entfaltung automatisch abnimmt. Da beim Entfalten der Gassackkammern 11, 12 Band sowohl für den sich vergrößernden Abschnitt 41 als auch für den sich vergrößernden Abschnitt 43 bereitgestellt werden muss, erfolgt bei dieser Variante eine Verringerung des Abstands zwischen den Innenseiten 11a, 11 b der beiden Gassackkammern 11, 12 mit erhöhter Geschwindigkeit.

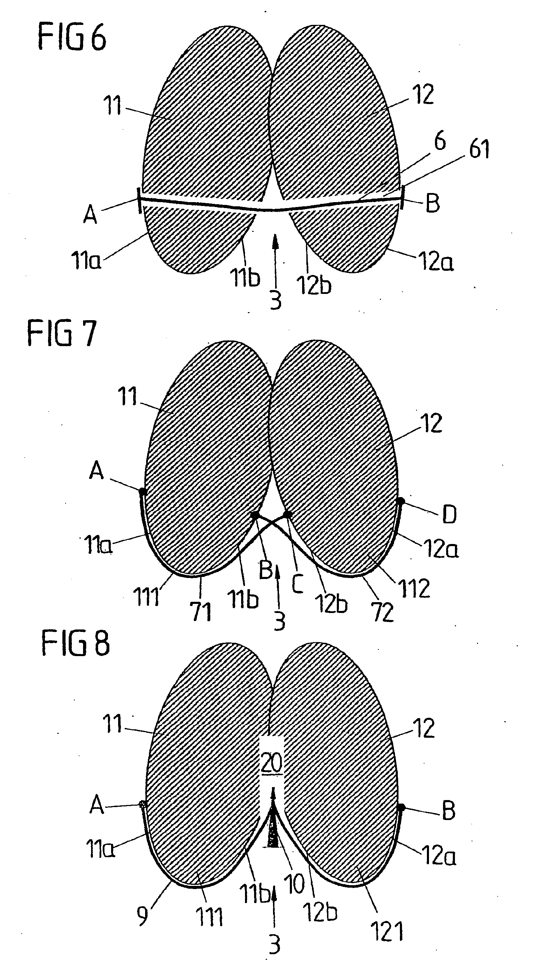

Die Figur 6 zeigt schematisch ein Ausführungsbeispiel, bei dem die beiden Gassackkammern 11, 12 über ein Band 6 miteinander verbunden sind. Jede Gassackkammer 11, 12 weist eine der anderen Gassackkammer abgewandte Außenfläche 11a, 12a und eine der anderen Gassackkammer zugewandte, an den Spalt 3 angrenzende Innenfläche 11 b, 12b auf. Das Band 5 erstreckt sich direkt von einem Befestigungspunkt A an der einen Außenseite 11a zu einem Befestigungspunkt B an der anderen Außenseite 12a. Das Band 6 verläuft dabei durch eine Art Tunnel 61, der im Gassack realisiert ist und nicht in Verbindung mit dem Gassackinneren steht.

Wenn die beiden Gassackkammern 11, 12 nur in geringem Maße mit Gas gefüllt sind, können ihre Innenflächen 11 b, 12b radial weit nach außen gedrückt werden, so dass sie einen großen maximalen Abstand aufweisen. Die Position der Außenflächen 11 a, 12a ist dagegen durch die Länge des Bandes 6 vorgegeben. Mit zunehmendem Befüllen des Gassackes wandern die beiden Innenflächen 11b, 12b aufeinander zu, so dass der Abstand der Innenflächen sich reduziert.

Bei der Ausgestaltung der Figur 7 sind zwei Bänder 71, 72 vorgesehen. Das eine Band 71 weist einen ersten Befestigungspunkt A an der Außenseite 11a der einen Gassackkammer 11 und einem Befestigungspunkt C an der Innenseite 12b der anderen Gassackkammer 12 auf. Das andere Band 72 weist einen Befestigungspunkt B an der Innenseite 11b der einen Gassackkammer 11 und einem Befestigungspunkt D an der Außenseite 12a der anderen Gassackkammer 12 auf. Auch hier gilt, dass im Zustand geringer Befüllung der Gassackkammern 11, 12 die Innenflächen 11b, 12b radial weit auseinander gedrückt werden können. Mit zunehmendem Befüllen, wenn die Endbereiche 111, 112 sich füllen, werden die um diese herum geführten Bänder 71, 72 ebenfalls nach unten geführt und ausgelenkt, wodurch die Innenflächen 11b, 12b einander genähert und die Breite des Spaltes 3 reduziert wird.

Die Figur 8 zeigt eine Ausgestaltung, bei der ein Band 9 von einem Befestigungspunkt A an der einen Außenseite 11a der einen Gassackkammer 11 über ein verschiebbares Teil 10, das im folgenden noch erläutert werden wird, zu einem Befestigungspunkt B an der Außenseite 12a der anderen Gassackkammer 12 geführt wird.

Das verschiebbare Teil 10 ist Teil einer Art Reißverschlussvorrichtung 20, die zwischen den Innenseiten 11b, 12b der beiden Gassackkammern 11, 12 ausgeführt und in der Figur 8 schematisch dargestellt ist. Die Reißverschlussvorrichtung 20 wird beispielsweise durch zwei Bänder realisiert, die an die Innenseiten 11b, 12b der Gassackkammern 11, 12 angenäht sind und um die ein Ring angeordnet ist (nicht dargestellt). Der Ring ist dabei das verschiebbare Teil 10.

Mit zunehmender Entfaltung der beiden Gassackkammern 11, 12 wird das verschiebbare Teil 10 aufgrund der sich vergrößernden Endbereiche 111, 121 und der damit verbundenen Auslenkung des Bandes 7 nach unten verschoben, wodurch der "Reißverschluss" zugezogen und dementsprechend die beiden Gassackkammern 11, 12 einander angenähert werden.

Unter "Reißverschlussvorrichtung" wird also nicht notwendigerweise eine Vorrichtung mit formschlüssig ineinander greifenden Elementen verstanden.

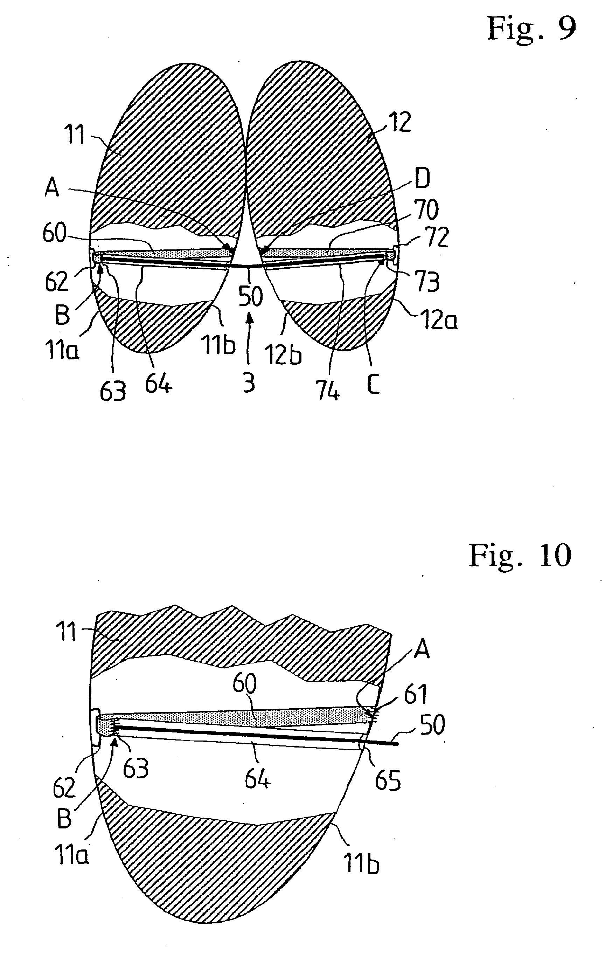

Bei dem Ausführungsbeispiel der Figur 9 ist eine Kombination von inneren und äußeren Bändern 50, 60, 70 zur Verbindung der beiden Gassackkammern 11, 12 vorgesehen. Die eine Gassackkammer 11 weist hierzu ein inneres, d.h. im Inneren der Gassackkammer verlaufendes Band 60, eine Umlenkschlaufe oder einen Umlaufring 62 und einen inneren Gewebeschlauch 64 auf. In entsprechender Weise weist die andere Gassackkammer 12 ebenfalls ein inneres Band 70, eine Umlenkschlaufe oder einen Umlenkring 72 und einen inneren Gewebeschlauch 74 auf. In den beiden Gewebeschläuchen 64, 74 und über den Spalt 3 hinweg erstreckt sich ein äußeres Band 50. Dies wird im Einzelnen anhand der vergrößerten Darstellung der Figur 10 der einen Gassackkammer 11 nun näher erläutert. Für die andere Gassackkammer 12 gelten die Ausführungen in entsprechender Weise.

Das innere Band 60 ist an der dem Spalt 3 zugewandten Innenseite 11 b der einen Gassackkammer 11 mit dieser verbunden. Dies erfolgt beispielsweise über eine Naht 61. Die Naht 61 bildet dabei einen Befestigungspunkt A für das innere Band 60. Das innere Band 60 verläuft vom Befestigungspunkt A im Inneren der Gassackkammer 11 in Richtung der der anderen Gassackkammer 12 abgewandten Außenseite 11a und wird dort mittels einer Umlenkschleife 62 umgelenkt. Es handelt sich beispielsweise um eine Gewebeschlaufe 62. Die Umlenkschleife 62 ist dabei im inneren der Gassackkammer 11 befestigt, so dass die Umlenkung im Inneren der Gassackkammer 11 erfolgt.

Das umgelenkte Ende des inneren Bandes 60 wird in einem Verbindungsbereich 63 mit dem Ende des Gewebeschlauches 64 vernäht. Der Gewebeschlauch 64 bildet eine Art Tunnel für das äußere Band 50 aus. Er befindet sich nicht in Kommunikation mit dem Inneren der Gassackkammer 11, d.h. Gas kann weder aus der Gassackkammer 11 in den Gewebeschlauch 64 noch aus dem Gewebeschlauch 64 in die Gassackkammer 11 strömen. Bei dem Gewebeschlauch 64 handelt es sich beispielsweise um einen nach innen gestülpten Rüssel.

In dem vernähten Verbindungsbereich 63 zwischen dem einen Ende des inneren Bandes 60 und dem einen Ende des Gewebeschlauches 64 ist zusätzlich das eine Ende des äußeren Bandes 50 vernäht, wodurch für das äußere Band 50 ein Befestigungspunkt B bereit gestellt wird. Das Band 50 erstreckt sich von dem Befestigungspunkt B durch den Gewebeschlauch 64 und tritt an der Öffnung 65 des Gewebeschlauches 64 aus diesem und damit auch aus der linken Gassackkammer 11 heraus. Das Band 50 überbrückt gemäß der Figur 9 den Spalt 3 und tritt dann über die Eintrittsöffnung des Gewebeschlauchs 74 der anderen Gassackkammer 12 in deren Gewebeschlauch 74 ein und ist dort in entsprechender Weise in einem Befestigungspunkt C mit dem einen Ende des inneren Bandes 70 und dem einen Ende des Gewebeschlauches 74 dieser Gassackkammer 12 vernäht. Das andere Ende des inneren Bandes 70 ist in einem Befestigungspunkt D mit der Innenseite 12b der Gassackkammer 12 verbunden.

Die Funktionsweise der Gassackvorrichtung ist wie folgt. So lange die beiden Gassackkammern 11, 12 in nur geringem Maße mit Gas gefüllt sind, können ihre Innenseiten 11b, 12b radial weit nach außen gedrückt werden, so dass sie einen großen maximalen Abstand aufweisen. Da in diesem Fall die Befestigungspunkte A, D ebenfalls gegenüber der in Figur 9 dargestellten Position radial nach außen verlagert sind, ist das Band 50 weniger stark gespannt. Dies erlaubt es, dass auch die Außenflächen 11a, 12a sich bei einem Aufprall eines Insassen, bzw. beim Anschießen des Insassen durch den Gassack, etwas nach außen bewegen können, so dass ein Körperteil eines Fahrzeuginsassen in OoP-Situation weit in den sich bildenden Spalt 3 eindringen kann. Die auf den Fahrzeuginsassen durch den sich entfaltenden Gassack ausgeübte Kraft ist dabei weiter reduziert.

Mit zunehmender Entfaltung und Füllung des Gassackes bewegen sich die beiden Innenflächen 11 b, 12b und damit die Befestigungspunkte A, D radial nach innen, wodurch das äußere Band 50 gespannt wird. Im fertig entfalteten Zustand bei gespanntem äußeren Band 50 legt die Summe der Längen der inneren Bänder 60, 70 und des äußeren Bandes 50 den maximalen Abstand zwischen den Außenflächen 11a, 12a der Gassackkammern 11, 12 fest. Der Abstand der Innenflächen 11b, 12b ist gegenüber der Ausgangsposition reduziert. Dies ist notwendigerweise der Fall, da aufgrund eines maximalen Abstands der Außenflächen 11a, 12a (vorgegeben durch die Bänder 50, 60, 70) eine Entfaltung unter Reduzierung des Abstandes der Innenflächen 11 b, 12b erfolgen muss.

Sowohl bei der Ausgestaltung der Figur 6 als auch bei der Ausgestaltung der Figuren 9 und 10 ist zu beachten, dass, wenn ein Körperteil eines Fahrzeuginsassen in Kontakt mit dem Gassack tritt, die jeweiligen Bänder automatisch gestrafft werden, da die beiden Gassackkammern 11, 12 beim Aufprall auseinander gedrückt bzw. aufgespreizt werden. Dies verhindert, dass die beiden Gasackkammern 11, 12 zu weit auseinander gedrückt werden und diese auch in der OoP-Situation und bei geringer Befüllung noch eine Rückhaltefunktion ausüben.

In einer Abwandlung der Ausführungsvariante der Figuren 9 und 10 sind die beiden inneren Bänder 60, 70 und das äußere Band 50 als ein Band, d.h. einteilig ausgebildet. Das einteilige Band verläuft zwischen den Punkten A und D und wird an den Umlenkschleifen 62, 72 umgelenkt. Weiter durchläuft das einteilige Band die beiden Gewebschläuche 64, 74 komplett. Die Gewebeschläuche 64, 74 sind dabei im Bereich der Befestigungspunkte B, C gasdicht mit dem Band verbunden, insbesondere gasdicht mit diesem vernäht.

Auch bei den Ausführungsbeispielen der Fig. 5 bis 10ist der maximale Abstand der an den Spalt 3 angrenzenden Innenseiten 11b, 12b der Gassackabschnitte 11, 12 von dem Befüllungsgrad des Gassacks abhängig, wobei mit zunehmendem Befüllungsgrad des Gassacks dieser Abstand abnimmt. Der maximale Abstand wird dabei insofern betrachtet, als durch Zufälligkeiten der Entfaltung es durchaus sein kann, dass die Innenflächen 11b, 12b selbst am Anfang der Entfaltung nahe aneinander liegen. Bei einer Interaktion mit einem Insassen in OoP-Situation oder einem Babysitz würden die Innenseiten dann aber voneinander wegbewegt und die Gassackabschnitte gespreizt. Eine solches voneinander wegbewegen der Innenseiten würde dann beendet, wenn die Innenseiten den maximalen Abstand erreichen. Dieser ändert sich in Abhängigkeit von dem Befüllungsgrad.

## Patentansprüche

1. Fahrer- oder Beifahrerairbagmodul mit einem Gassack, der zum Schutz eines Fahrzeuginsassen aufblasbar ist und der zwei Gassackabschnitte aufweist, wobei
- der aufgeblasene Gassack an seiner einem zu schützenden Fahrzeuginsassen zugewandten Vorderseite einen zwischen den beiden Gassackabschnitten (11, 12) verlaufenden Spalt (3) ausbildet, durch den die beiden Gassackabschnitte (11, 12) auf der Vorderseite des Gassacks vollständig voneinander getrennt sind, und
- Mittel (4) vorgesehen sind, die bewirken, dass der maximale Abstand der an den Spalt (3) angrenzenden Innenseiten (11b, 12b) der Gassackabschnitte (11, 12) von dem Befüllungsgrad des Gassacks (1) abhängt, wobei mit zunehmendem Befüllungsgrad des Gassacks (1) dieser Abstand abnimmt,
**dadurch gekennzeichnet,**
**dass** die Mittel (4) ein zumindest teilweise an der Außenhaut des Gassacks befestigtes Band (4) umfassen, das mindestens einen ersten und einen zweiten Abschnitt (41, 42) variabler Länge aufweist, wobei
- die Länge des ersten Abschnitts (41) in dem Maße zu- oder abnimmt, in dem die Länge des zweiten Abschnitts (42) ab- oder zunimmt, und
- die Länge des zweiten Abschnitts (42) den maximalen Abstand der Innenseiten (11b, 12b) der Gassackabschnitte (11, 12) festlegt.

2. Airbagmodul nach Anspruch 1, **dadurch gekennzeichnet**, die Länge des ersten Abschnitts (41) mit zunehmendem Befüllen des Gassacks zunimmt und die Länge des zweiten Abschnitts (42) mit zunehmendem Befüllen des Gassacks abnimmt.

3. Airbagmodul nach Anspruch 1 oder 2, **dadurch gekennzeichnet, dass** das Band (4) an mindestens einem ersten Punkt (C) mit dem einen Gassackabschnitt (11), an mindestens einem zweiten Punkt (B) mit dem anderen Gassackabschnitt (12) und an mindestens einem dritten Punkt (A) mit dem Gassack (1) oder einem anderen Element des Airbagmoduls verbunden ist.

4. Airbagmodul nach Anspruch 3, **dadurch gekennzeichnet, dass** das Band (4) an seinem einen Ende an einem ersten Befestigungspunkt (A) des Gassacks oder eines anderen Elements des Airbagmoduls fixiert ist, das Band (4) an seinem anderen Ende an einem zweiten Befestigungspunkt (C) des einen Gassackabschnitts (11) fixiert ist und zwischen diesen Befestigungspunkten (A, C) an einem am anderen Gassackabschnitt (12) ausgebildeten Umlenkpunkt (B) eine Umlenkung erfährt, wobei der erste Abschnitt (41) zwischen dem ersten Befestigungspunkt (A) und dem Umlenkpunkt (B) und der zweite Abschnitt (42) zwischen dem Umlenkpunkt (B) und dem zweiten Befestigungspunkt (C) gebildet ist.

5. Airbagmodul nach Anspruch 4, **dadurch gekennzeichnet, dass** der Umlenkpunkt (B) durch eine Schlinge oder Öse am Gassack gebildet ist, durch die das Band (4) hindurchgeführt ist.

6. Airbagmodul nach Anspruch 4 oder 5, **dadurch gekennzeichnet, dass** der erste Befestigungspunkt (A) derart gewählt ist, dass seine Position nach dem Aufblasen des Gassacks im wesentlichen unverändert bleibt.

7. Airbagmodul nach Anspruch 4 oder 5, **dadurch gekennzeichnet, dass** der erste Befestigungspunkt (A) derart gewählt ist, dass seine Position von einem Aufblasen des Gassacks nicht tangiert wird.

8. Airbagmodul nach mindestens einem der Ansprüche 4 bis 7, **dadurch gekennzeichnet, dass** der Umlenkpunkt (B) und der zweite Befestigungspunkt (C) jeweils in einem dem zu schützenden Fahrzeuginsassen zugewandten vorderen Bereich (111, 112) der Gassackabschnitte (11, 12) ausgebildet sind.

9. Airbagmodul nach Anspruch 3, **dadurch gekennzeichnet, dass** das Band (4) geschlossen ausgebildet ist und entweder über zwei Umlenkpunkte (B, C) und einen Befestigungspunkt (A) oder über drei Umlenkpunkte mit dem Gassack oder anderen Elementen des Airbagmoduls verbunden ist.

10. Fahrer- oder Beifahrerairbagmodul mit einem Gassack, der zum Schutz eines Fahrzeuginsassen aufblasbar ist und der zwei Gassackabschnitte aufweist, wobei
- der aufgeblasene Gassack an seiner einem zu schützenden Fahrzeuginsassen zugewandten Vorderseite einen zwischen den beiden Gassackabschnitten (11, 12) verlaufenden Spalt (3) ausbildet, durch den die beiden Gassackabschnitte (11, 12) auf der Vorderseite des Gassacks vollständig voneinander getrennt sind,
- Mittel (50, 60, 70) vorgesehen sind, die bewirken, dass der maximale Abstand der an den Spalt (3) angrenzenden Innenseiten (11b, 12b) der Gassackabschnitte (11, 12) von dem Befüllungsgrad des Gassacks (1) abhängt, wobei mit zunehmendem Befüllungsgrad des Gassacks (1) dieser Abstand abnimmt, und
- die Mittel mindestens ein Band (50, 60, 70) umfassen, das die beiden Gassackabschnitte (11, 12) miteinander verbindet.
**dadurch gekennzeichnet,**
**dass** jeder Gassackabschnitt (11, 12) ein inneres Band (60, 70) aufweist, das mit einem die beiden Gassackabschnitte (11, 12) verbindenden äußeren Band (50) zusammenwirkt, wobei das innere Band (60, 70) jeweils im Gassackinneren von einem Befestigungspunkt (A, D) an der dem Spalt (3) zugewandten Innenseite (11b, 12b) zu einer dem Spalt (3) abgewandten Außenseite (11a, 11b) des Gassackabschnittes (11, 12) geführt, dort an einer innenseitigen Umlenkvorrichtung (62, 72) umgelenkt und mit einem Ende des äußeren Bandes (50) verbunden ist.

11. Airbagmodul nach Anspruch 10, **dadurch gekennzeichnet, dass** die Bänder (50, 60, 70) den maximalen Abstand zwischen der dem Spalt (3) abgewandten Außenseite (11a) des einen Gassackabschnitts (11) und der dem Spalt (3) abgewandten Außenseite (12a) des anderen Gassackabschnitts (12) festlegen, wobei die an den Spalt (3) angrenzenden Innenseiten (11b, 12b) der Gassackabschnitte (11, 12) mit zunehmenden Befüllungsgrad des Gassackes (1) sich aufeinander zubewegen.

12. Airbagmodul nach Anspruch 10 oder 11, **dadurch gekennzeichnet, dass** das äußere Band (50) innerhalb der Gassackkammern (11, 12) jeweils in einem Gewebeschlauch (64, 74) geführt ist, der nicht in Verbindung mit dem Inneren der Gassackkammern (11, 12) steht.

13. Airbagmodul nach Anspruch 12, **dadurch gekennzeichnet, dass** bei jeder Gassackkammer (11, 12) das eine Ende des inneren Bandes (60, 70), das eine Ende des Gewebeschlauches (64, 74) und ein Ende des äußeren Bandes (50) in einem vernähten Verbindungsbereich (63, 73) miteinander verbunden sind.

14. Airbagmodul nach einem der Ansprüche 10 bis 12, **dadurch gekennzeichnet, dass** die inneren Bänder (60, 70) und das äußere Band (50) einteilig als ein Band ausgebildet sind.

15. Airbagmodul nach den Ansprüchen 12 und 14, **dadurch gekennzeichnet, dass** der Gewebeschlauch (64, 74) jeder Gassackkammer (11, 12) an seinem im Inneren der Gassackkammer (11, 12) liegenden Ende gasdicht mit dem Band verbunden ist.

16. Airbagmodul nach einem der vorangehenden Ansprüche, **dadurch gekennzeichnet, dass** die beiden Gassackabschnitte (11, 12) durch zwei Gassackkammern gebildet sind, die an ihrer einem zu schützenden Fahrzeuginsassen abgewandten Rückseite (13) zusammenlaufen.

17. Airbagmodul nach einem der vorangehenden Ansprüche, **dadurch gekennzeichnet, dass** das Band (4, 50, 60, 70) durch einen Gewebestreifen gebildet ist.

## Claims

1. A driver's or passenger's airbag module, with an airbag which can be inflated in order to protect a vehicle occupant and which has two airbag sections, wherein
- the inflated airbag, on its front side facing a vehicle occupant to be protected, forms a gap (3) which runs between the two airbag sections (11, 12) and by means of which the two airbag sections (11, 12) are completely separated from each other on the front side of the airbag, and
- means (4) are provided which cause the maximum distance between the inner sides (11b 12b) of the airbag sections (11, 12), which inner sides are adjacent to the gap (3), to be dependent on the degree of filling of the airbag (1), with said distance decreasing with increasing degree of filling of the airbag (1),
**characterized**
**in that** the means (4) comprise a strap (4) which is at least partially fastened to the outer skin of the airbag and has at least one first and one second section (41, 42) of variable length, wherein
- the length of the first section (41) increases or decreases to the extent to which the length of the second section (42) decreases or increases, and
- the length of the second section (42) defines the maximum distance between the inner sides (11b, 12b) of the airbag sections (11, 12).

2. The airbag module as claimed in claim 1, **characterized in that** the length of the first section (41) increases with increasing filling of the airbag, and the length of the second section (42) decreases with increasing filling of the airbag.

3. The airbag module as claimed in claim 1 or 2 **characterized in that** the strap (4) is connected at at least one first point (C) to the one airbag section (11), at at least one second point (B) to the other airbag section (12) and at at least one third point (A) to the airbag (1) or to another element of the airbag module.

4. The airbag module as claimed in claim 3, **characterized in that** the strap (4) is fixed at its one end to a first fastening point (A) of the airbag or of another element of the airbag module, the strap (4) is fixed at its other end to a second fastening point (C) of the one airbag section (11) and, between said fastening points (A, C), undergoes a deflection at a deflection point (B) formed on the other airbag section (12), with the first section (41) being formed between the first fastening point (A) and the deflection point (B) and the second section (42) being formed between the deflection point (B) and the second fastening point (C).

5. The airbag module as claimed in claim 4, **characterized in that** the deflection point (B) is formed on the airbag by a loop or eyelet through which the strap (4) is guided.

6. The airbag module as claimed in claim 4 or 5, **characterized in that** the first fastening point (A) is selected in such a manner that its position remains essentially unchanged after the airbag is inflated.

7. The airbag module as claimed in claim 4 or 5, **characterized in that** the first fastening point (A) is selected in such a manner that its position is not touched by inflation of the airbag.

8. The airbag module as claimed in at least one of claims 4 to 7, **characterized in that** the deflection point (B) and the second fastening point (C) are each formed in a front region (111, 112) of the airbag sections (11, 12), which front region faces the vehicle occupant to be protected.

9. The airbag module as claimed in claim 3, **characterized in that** the strap (4) is of closed design and is connected to the airbag or to other elements of the airbag module either via two deflection points (B, C) and a fastening point (A) or via three deflection points.

10. A driver's or passenger's airbag module, with an airbag which can be inflated in order to protect a vehicle occupant and which has two airbag sections, wherein
- the inflated airbag, on its front side facing a vehicle occupant to be protected, forms a gap (3) which runs between the two airbag sections (11, 12) and by means of which the two airbag sections (11, 12) are completely separated from each other on the front side of the airbag,
- means (50, 60, 70) are provided which cause the maximum distance between the inner sides (11b, 12b) of the airbag sections (11, 12), which inner sides are adjacent to the gap (3), to be dependent on the degree of filling of the airbag (1), with said distance decreasing with increasing degree of filling of the airbag (1), and
- the means comprise at least one strap (50, 60, 70) which connects the two airbag sections (11, 12) to each other,
**characterized**
**in that** each airbag section (11, 12) comprises an inner strap (60, 70) which interacts with an outer strap (50) which connects the two airbag sections (11, 12), wherein the inner strap (60, 70) is guided respectively in the interior of the airbag from a fastening point (A, D) on the inner side (11b, 12b) of the airbag section (11, 12), which inner side faces the gap (3), to an outer side (11a, 11b) of the same, which outer side faces away from the gap (3), is deflected there at an inner deflection device (62, 72) and is connected to one end of the outer strap (50).

11. The airbag module as claimed in claim 10, **characterized in that** the straps (50, 60, 70) fix the maximum distance between the outer side (11a) of the one airbag section (11), which outer side faces away from the gap (3), and the outer side (12a) of the other airbag section (12), which outer side (12a) faces away from the gap (3), with the inner sides (11b, 12b) of the airbag sections (11, 12), which inner sides are adjacent to the gap (3), moving towards one another with increasing degree of filling of the airbag (1).

12. The airbag module as claimed in one of claims 10 or 11, **characterized in that** the outer strap (50) is guided within the airbag chambers (11, 12) in each case in a fabric tube (64, 74) which is not connected to the interior of the airbag chambers (11, 12).

13. The airbag module as claimed in claim 12, **characterized in that**, in each airbag chamber (11, 12), the one end of the inner strap (60, 70), the one end of the fabric tube (64, 74) and one end of the outer strap (50) are connected to one another in a sewn together connecting region (63, 73).

14. The airbag module as claimed in one of claims 10 to 12, **characterized in that** the inner straps (60, 70) and the outer strap (50) are formed integrally as a single strap.

15. The airbag module as claimed in claims 12 and 14, **characterized in that** the fabric tube (64, 74) of each airbag chamber (11, 12) is connected at its end located in the interior of the airbag chamber (11, 12) to the strap in a gas-tight manner.

16. The airbag module as claimed in one of the preceding claims, **characterized in that** the two airbag sections (11, 12) are formed by two airbag chambers which converge on their rear side (13) which faces away from a vehicle occupant to be protected.

17. The airbag module as claimed in one of the preceding claims, **characterized in that** the strap (4, 50, 60, 70) is formed by a fabric strip.

## Revendications

1. Module d'airbag pour conducteur ou passager, comprenant un coussin gonflable, qui est gonflable pour la protection d'un occupant d'un véhicule et comprend deux tronçons de coussin gonflable, dans lequel
- le coussin gonflable gonflé forme, sur sa face antérieure tournée vers un occupant du véhicule qu'il s'agit de protéger, une fente (3) qui s'étend entre les deux tronçons de coussin gonflable (11, 12), par laquelle les deux tronçons de coussin gonflable (11, 12) sont totalement séparés l'un de l'autre sur la face antérieure du coussin gonflable, et
- il est prévu des moyens (4) dont l'effet est que la distance maximale des faces intérieures (11b, 12b), adjacentes à la fente (3), des tronçons de coussin gonflable (11, 12) dépend du degré de remplissage du coussin gonflable (1), de sorte que cette distance diminue lorsque le degré de remplissage du coussin gonflable (1) augmente,
**caractérisé en ce que**
les moyens (4) comprennent une bande (4) au moins partiellement fixée sur la peau extérieure du coussin gonflable, laquelle comprend au moins un premier et un deuxième tronçon (41, 42) à longueur variable, où
- la longueur du premier tronçon (41) augmente ou diminue dans la mesure dans laquelle la longueur du deuxième tronçon (42) diminue ou augmente, et
- la longueur du deuxième tronçon (42) détermine la distance maximum des faces intérieures (11b, 12b) des tronçons de coussin gonflable (11, 12).

2. Module d'airbag selon la revendication 1, **caractérisé en ce que** la longueur du premier tronçon (41) augmente au fur et à mesure du remplissage de coussin gonflable et la longueur du deuxième tronçon (42) diminue au fur et à mesure du remplissage de coussin gonflable.

3. Module d'airbag selon la revendication 1 2, **caractérisé en ce que** la bande (4) est reliée en au moins un premier point (C) à l'un des tronçons de coussin gonflable (11), en au moins un second point (B) à l'autre tronçon de coussin gonflable (12), et en au moins un troisième point (A) au coussin gonflable (1) ou à un autre élément du module d'airbag.

4. Module d'airbag selon la revendication 3, **caractérisé en ce que** la bande (4) est fixée à l'une de ses extrémités en un premier point de fixation (A) du coussin gonflable ou à un autre élément du module d'airbag, la bande (4) est fixée à son autre extrémité en un deuxième point de fixation (C) d'un premier tronçon de coussin gonflable (11) et subit entre ces points de fixation (A, C), au niveau d'un point de déflexion (B) réalisé sur l'autre le tronçon de coussin gonflable (12), une déflexion, de sorte que le premier tronçon (41) est formé entre le premier point de fixation (A) et le point de déflexion (B), et que le deuxième tronçon (42) est formé entre le point de déflexion (B) et le deuxième point de fixation (C).

5. Module d'airbag selon la revendication 4, **caractérisé en ce que** le point de déflexion (B) est formé par une boucle ou par un oeillet au niveau du coussin gonflable, à travers laquelle/lequel est passée la bande (4).

6. Module d'airbag selon la revendication 4 ou 5, **caractérisé en ce que** le premier point de fixation (A) est choisi de telle façon que sa position reste sensiblement invariable après le gonflage du coussin gonflable.

7. Module d'airbag selon la revendication 4 ou 5, **caractérisé en ce que** le premier point de fixation (A) est choisi de telle façon que sa position n'est pas concernée par un gonflage du coussin gonflable.

8. Module d'airbag selon au moins l'une des revendications 4 à 7, **caractérisé en ce que** le point de déflexion (B) et le second point de fixation (C) sont respectivement réalisés dans une région antérieure (111, 112), tournée vers l'occupant du véhicule qu'il s'agit de protéger, des tronçons de coussin gonflable (11, 12).

9. Module d'airbag selon la revendication 3, **caractérisé en ce que** la bande (4) est réalisée fermée et est reliée au coussin gonflable ou à d'autres éléments du module d'airbag soit via deux points de déflexion (B, C) et un point de fixation (A) soit via trois points de déflexion.

10. Module d'airbag pour conducteur ou passager, comprenant un coussin gonflable, qui est gonflable pour la protection d'un occupant d'un véhicule et comprend deux tronçons de coussin gonflable, dans lequel
- le coussin gonflable gonflé forme, sur sa face antérieure tournée vers un occupant du véhicule qu'il s'agit de protéger, une fente (3) qui s'étend entre les deux tronçons de coussin gonflable (11, 12), par laquelle les deux tronçons de coussin gonflable (11, 12) sont totalement séparés l'un de l'autre sur la face antérieure du coussin gonflable, et
- il est prévu des moyens (50, 60, 70) dont l'effet est que la distance maximale des faces intérieures (11b, 12b), adjacentes à la fente (3), des tronçons de coussin gonflable (11, 12) dépend du degré de remplissage du coussin gonflable (1), de sorte que cette distance diminue lorsque le degré de remplissage du coussin gonflable (1) augmente,
- les moyens comprennent au moins une bande (50, 60, 70), qui relie les deux tronçons de coussin gonflable (11, 12) l'un à l'autre, **caractérisé en ce que**
chaque tronçon de coussin gonflable (11, 12) comprend une bande intérieure (60, 70), qui coopère avec une bande extérieure (50) reliant les deux tronçons de coussin gonflable (11, 12), où ladite bande intérieure (60, 70) est guidée respectivement à l'intérieur du coussin gonflable depuis un point de fixation (A, D) sur face intérieure (11b, 12b) tournée vers la fente (3) vers une face extérieure (11a, 11b), détourné de la fente (3), du tronçon de coussin gonflable (11, 12), est déviée à cet endroit au moyen d'un dispositif de déflexion (62, 72) côté intérieur, et est reliée à une extrémité de la bande extérieure (50).

11. Module d'airbag selon la revendication 10, **caractérisé en ce que** les bandes (50, 60, 70) déterminent la distance maximum entre la face extérieure (11a), détournée de la fente (3), d'un premier tronçon de coussin gonflable (11) et la face extérieure (12a), détournée de la fente (3), de l'autre tronçon de coussin gonflable (12), et les faces intérieures (11b, 12b), adjacentes à la fente (3), des tronçons de coussin gonflable (11, 12), se déplacent l'une vers l'autre lorsque le degré de remplissage du coussin gonflable (1) augmente.

12. Module d'airbag selon la revendication 10 ou 11, **caractérisé en ce que** la bande extérieure (50) est guidée à l'intérieur des chambres (11, 12) de coussin gonflable, respectivement dans un tuyau souple textile (64, 74) qui n'est pas en liaison avec l'intérieur des chambres (11, 12) de coussin gonflable.

13. Module d'airbag selon la revendication 12, **caractérisé en ce que** dans chaque chambre (11, 12) de coussin gonflable, une extrémité de la bande intérieure (60, 70), une extrémité du tuyau souple textile (64, 74), et une extrémité de la bande extérieure (50) sont reliées les unes aux autres dans une zone de jonction cousue (63, 73).

14. Module d'airbag selon l'une des revendications 10 à 12, **caractérisé en ce que** les bandes intérieures (60, 70) et la bande extérieure (50) sont réalisées d'un seul tenant sous forme d'une bande unique.

15. Module d'airbag selon les revendications 12 et 14, **caractérisé en ce que** le tuyau souple textile (64, 74) de chaque chambre (11, 12) de coussin gonflable est relié de manière étanche aux gaz avec la bande au niveau de son extrémité située à l'intérieur des chambres (11, 12) de coussin gonflable.

16. Module d'airbag selon l'une des revendications précédentes, **caractérisé en ce que** les deux tronçons de coussin gonflable (11, 12) sont formés par deux chambres de coussin gonflable qui se regroupent au niveau de leur face postérieure (13) détournée d'un occupant du véhicule qu'il s'agit de protéger.

17. Module d'airbag selon l'une des revendications précédentes, **caractérisé en ce que** la bande (4, 50, 60, 70) est formée par un ruban textile.
